# EUROPEAN PATENT SPECIFICATION

(11) **EP 3 517 814 B1**
(45) Date of publication and mention of the grant of the patent: **09.08.2023**
(21) Application number: 19152072.5
(22) Date of filing: 16.01.2019
(51) Int. Cl.: F16L 3/10, F16L 3/23, B60R 16/02, F16L 55/035, H02G 3/32

(54) **CLAMP ASSEMBLY FOR SECURING WIRE BUNDLES TO A STRUCTURE**
KLEMMVORRICHTUNG ZUR BEFESTIGUNG VON DRAHTBÜNDELN AN EINER STRUKTUR
ENSEMBLE DE SERRAGE POUR FIXER DES FAISCEAUX DE CÂBLES À UNE STRUCTURE

(30) Priority: 25.01.2018 US 201815880052
(43) Date of publication of application: 31.07.2019
(73) Proprietor: The Boeing Company, Arlington, VA 22202 (US)
(72) Inventor: SEO, Jin-Seog, Chicago, IL 60606-1596 (US); JOHNSON, Robert T., Chicago, IL 60606-1596 (US); CHAU, Jacky-Vy C., Chicago, IL 60606-1596 (US); ATHERTON, Carey N., Chicago, IL 60606-1596 (US); KIM, Jin Heung, Chicago, IL 60606-1596 (US); LAPLANTE, Jesse A., Chicago, IL 60606-1596 (US)
(74) Representative: Lloyd, Robin Jonathan

(56) References cited:
- WO-A1-2017/046570
- DE-U1- 20 306 224
- FR-E- 95 704
- GB-A- 1 366 995
- US-A1- 2017 146 154

## Description

### BACKGROUND

This disclosure addresses clamp assemblies and more particularly clamp assemblies which secure wire bundles to a structure.

In the fabrication of many industrial items and assemblies, electrical wiring of that item or assembly is an essential part of the completion of the fabrication of that item or assembly. The wiring in many instances provides needed communications and/or control signal transmissions to different locations with respect to the item or assembly so as to facilitate the proper operation of the completed fabricated item or assembly. One example of such a fabricated assembly which requires wiring for transmitting communications and control signals is an aircraft. Securement of the wiring to the aircraft and routing of the wiring through the aircraft is essential to the fabrication and maintenance of the aircraft.

Clamps are employed to capture bundles of wires for the purpose of securing the bundles to the aircraft and facilitate routing the wires through the aircraft to needed locations within the aircraft. Securement of bundles of wires to the aircraft is a time consuming and costly and provides ergonomic challenges to the installers.

Currently installers often spend long periods of time in awkward physical positions to accomplish the needed wiring securement to the aircraft structure. At times, these installation circumstances are even more demanding with the installation occurring in confined spaces within the aircraft. Current installment includes use of a single piece clamp which has opposing ends wherein each opposing end has an aperture. After installing a wire bundle within the single piece clamp, the apertures are aligned, a fastener is be positioned through the aligned apertures and the fastener is fastened to the structure accomplishing both securement of the clamp to the aircraft structure and clamping shut the clamp thereby securing confinement of the wire bundle positioned within the clamp.

Installing current clamps includes initially temporarily installing the clamp to a structure or sub-assembly of the aircraft to establish desired routing positions for the wiring. Typically, at a later time of the fabrication of the aircraft, final installation of wire bundles takes place. The installer uninstalls the temporarily installed clamp, installs the wire bundle within the clamp and thereafter lines up the apertures, as mentioned above and inserts a fastener through the openings. The fastener is installed to the aircraft structure with a tool securing the bundle to structure or subassembly and at the same time clamping shut the clamp assembly securing the wire bundle within the clamp assembly. This procedure is time consuming and introduces further difficulties in that the installer must confine the wires within the clamp and line up the apertures of the opposing ends of the clamp assembly for inserting the fastener there through. Once the fastener is inserted through the apertures, the installer with a tool such as a screw driver, fastens the clamp assembly to the structure securing shut the clamp assembly and capturing the wires within the clamp assembly. These steps taken by the installer using this clamp assembly can position the installer at a location within the aircraft securing a particular clamp assembly for an extended period of time. This installation can be further impacted with the securement of the clamp assembly and bundled wires occurring within a confined location within the aircraft. With the installer being positioned installing a wire bundle at a particular location within the aircraft for extended period, the installation of the wire bundle can present an ergonomic challenge. There is a need to have a clamp assembly which makes the installation of a wire bundle quick, simple and easy.

Other clamp assemblies have an enclosing clamp or strap portion hinged to a clamp body of the clamp assembly. The clamp body can be secured to the aircraft structure at a desired location within the aircraft which will be the location of the clamp assembly for the assembled completed aircraft. The clamp or strap portion is positioned hinged to a body of the clamp assembly in an open unsecured position relative to the body of the clamp assembly. An end portion of the clamp or strap portion of the clamp assembly carries a zip-tie configuration to secure the clamp or strap portion closed to the body of the clamp assembly. The body of the clamp assembly carries a compatible zip-tie configuration to secure to the zip-tie configuration carried by the clamp or strap portion. Once wire bundles are extended through the aircraft, the installer can position a wire bundle into the clamp assembly and confine the wire bundle to the clamp assembly with closing the strap portion and securing the strap portion to the body of the clamp assembly with engaging the zip-tie portion of the strap portion to the corresponding zip-tie portion positioned on the body of the clamp assembly. In closing the strap portion and locking the strap portion to the body of the clamp assembly, the strap portion and the body can be pushed together engaging the zip-tie arrangement locking in the wire bundle within the clamp assembly. This positioning of the wire bundle into the clamp assembly and locking the wire bundle into the clamp assembly can be done by hand without a tool.

However, this clamp assembly configuration presents some undesired results. The zip-tie arrangement for engagement of the strap portion to the body of the clamp assembly can easily experience the installer easily positioning the clamp or strap portion into an over pressured positioned against the bundle wires being secured in making the zip-tie engagement between the strap portion and the body of the clamp assembly. This over pressured engagement can impart damage and unnecessary wear to the bundled wires being secured.

Moreover, this clamp assembly configuration promotes movement of the centerline of the opening, in which the bundle of wires are carried within the clamp assembly. An over pressure engagement of the zip-tie arrangement can result in the center of the opening moving from in many cases is a center of a circular opening such that the ending position of the center results in the opening shape being more of an oval shape. During installation the installer can easily exert more than needed force to the strap portion in making the zip-tie engagement with the zip-tie receiving configuration of the body of the clamp assembly thereby moving centerline of the opening of the clamp assembly. The change in shape of the opening which carries the wire bundle also changes the relationship of the spacing of the wires within the wire bundle and the spacing of the wires captivated in the clamp in relationship to the structure to which the clamp assembly is secured. This change of the centerline of the opening and resulting shape of the wire bundle being carried by the clamp assembly is a concern with respect to placing the installation of the wiring for the aircraft in noncompliance with respect to codes pertaining to aircraft wiring of the Federal Aviation Administration. As a result, there is a need to provide a clamping assembly which will more easily sustain a centerline position of the opening of the clamp assembly carrying the wire bundle in carrying out the securement of the clamp or strap portion of the clamp assembly to the body portion of the clamp assembly.

FR95704E, in accordance with a machine translation of its abstract, states: "The object of the present invention is to improve screwless fasteners for holding objects of various shapes, in order to facilitate their installation and manufacture and to make them more aesthetic." US2017/146154A1, in accordance with its abstract, states: "Clamping device includes a clamp frame that is configured to move between an open configuration, in which the clamp frame is configured to receive at least one longitudinal element, and a closed configuration, in which the clamp frame wraps around and holds the at least one longitudinal element. The clamp frame includes a coupling end having an inner surface and a coupling base having an outer surface. The inner and outer surfaces have profiles that form a locked engagement to hold the clamp frame in the closed configuration. The clamping device also includes a secondary locking mechanism that secures the coupling end and the coupling base to each other. The secondary locking mechanism is activated after the clamp frame is held in the closed configuration by the locked engagement." DE20306224U1, in accordance with a machine translation of its first claim, states "Detachable mounting arrangement for tubular components, characterized by a base part with a receiving area partially encompassing the circumference of the imaginary tube with two receiving area opening edges, between which the tube can be inserted into the receiving area of the base part, through a receiving area opening edge with the base part in the area of one receiving area opening edge pivotably connected one-armed bracket arm for embracing the pipe, the free end of the bracket arm being releasably connectable to the area of the other receiving area opening edge." WO2017/046570A1, in accordance with its abstract, states: "A method and apparatus are disclosed for retaining at least one elongate object. The apparatus includes a first retaining member (702) comprising at least one female portion (712), a further retaining member (700) comprising at least one male portion (732) receivable in the at least one female portion, wherein the at least one male portion (732) comprises a first connecting region adapted to cooperate with a further connecting region and at least one securing element (785) slidable in a keyway (775) of the first retaining member (702) and engagable with said male portion (732) to securely connect the first and further retaining members and retain an elongate object therebetween.". GB1366995A, in accordance with its description, states: "This invention relates to a pipe clip. According to the present invention there is provided a pipe clip comprising a body member and a hinge member adapted to be pivotally connected thereto for movement between a closed position, in which respective ends of the body member and the hinge member abut to define a socket for a pipe, and an open position for allowing the pipe to be inserted into the clip, the arrangement being such that, in use, insertion of the pipe into the clip causes the hinge member to pivot from said open position to said closed position.".

### SUMMARY

A clamp assembly according to claim 1 is provided. A clamp assembly for securing wire bundles to a structure, includes a body which includes a first portion having a first side for positioning the body onto the structure and a second portion having a second side which extends in a curvilinear direction wherein the second portion extends between a first end and a second end. The assembly further includes one of a hinge pin or hinge flange associated with the first end of the second portion and a latch member connected to the body. The latch member extends in a direction away from the second end of the second portion with a termination edge positioned spaced apart from the second end of the second portion and the termination edge extends in a direction in angular relationship to the curvilinear direction of the second side. Clamp assembly further includes a strap member which includes the other of the one of the hinge pin or the hinge flange associated with the first end of the second portion for rotatably coupling the strap member to the body. Strap member also has an end portion which engages the latch member.

### BRIEF SUMMARY OF THE DRAWINGS

FIG. 1 a perspective view of an aircraft;
FIG. 2 is a top plan view of use of the clamp assemblies securing bundled wires to structural assemblies within the aircraft of FIG. 1 and routing the bundled wires as needed within the aircraft;
FIG. 3 is a cutaway perspective view of a clamp assembly encircled and designated 3 in FIG. 2 securing a bundle of wires to the structure within the aircraft;
FIG. 4 is a perspective view of the clamp assembly in a closed locked position;
FIG. 5 is a perspective view of the clamp assembly of FIG. 4 in an open unlocked position;
FIG. 6 is an exploded perspective view of the clamp assembly of FIG. 5
FIG. 7 is a side elevation view of the clamp assembly of FIG. 4;
FIG. 8 is a side elevation view of the clamp assembly of FIG. 5;
FIG. 9 is a cross section view along line 9-9 of FIG. 2; and
FIG. 10 is the cross section view of FIG. 9 with a tool unlocking a latch member unlocking the strap member with respect to the body of the clamp assembly.

### DESCRIPTION

As discussed earlier, there is a need for an ergonomically friendly clamp assembly for securing bundled wires to a structure. The clamp assembly needs to provide for a quick, easy and reliable installation of the bundled wires into the clamp assembly that has been secured to the structure. The clamp assembly needs to provide the installer with the ability, if needed, to hand install to quickly, easily and reliably hand install a bundle of wires into the clamp assembly secured at any location within, for example, an aircraft. The clamp assembly needs to provide the installer the ability to not be positioned at the installation location for any extended period of time. This is particularly important with respect to wire bundle installations in more confined areas and/or areas within an aircraft, for example, that otherwise can present ergonomic demands on the installer should the installer be positioned in that installation position for an extended period of time.

With respect to reliable securement of a wire bundle to a structure there is a need to provide a clamping assembly for securing a bundle of wires which will sustain a centerline position of the wire carrying portion of the clamping assembly upon securing the clamp portion or strap portion of the clamp assembly to the body portion of the clamp assembly at the time of capturing and enclosing the wire bundle. This ability to sustain a centerline and an opening shape through which the wire bundle extends through the clamp assembly provides for an installation of wires that are more likely to comply with the wiring standards and regulations set forth for spacing of the wires secured to the structure.

The clamp assembly of the present disclosure provides an ergonomic benefit wherein the installer can quickly and easily install a wire bundle into the clamp assembly without a need for a tool to insert and confine the wires within the clamp assembly. The clamp assembly provides significant cost savings with respect to time and labor associated with the installation. In addition, the present clamp assembly maintains the centerline of the wire carrying portion of the clamp assembly when a clamp portion or strap portion of the clamp assembly is secured to the body of the clamp assembly enclosing the bundle of wires. This maintenance of the centerline position provides optimization in meeting wiring requirements of the Federal Aviation Administration, for example, thereby reducing occurrences of a rework of wire bundle installations.

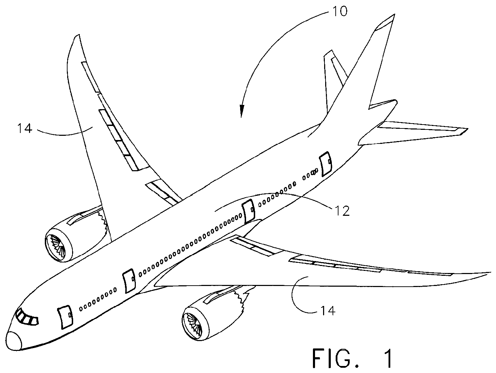

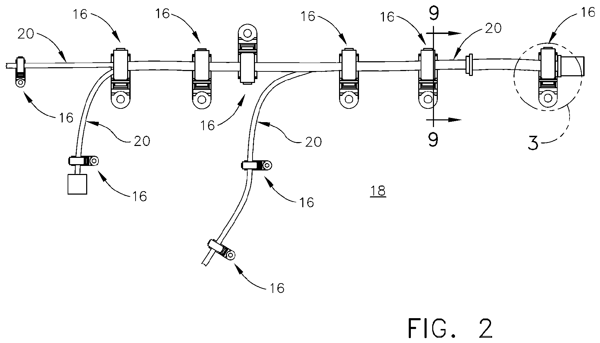

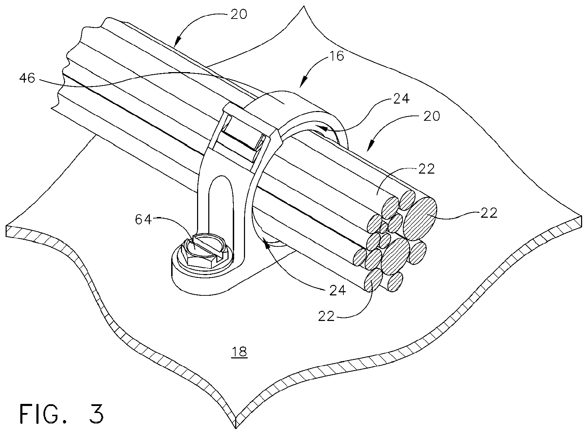

In referring to FIG. 1, aircraft 10 is shown as an example of a fabricated assembly which utilizes the installation of wire bundles. Wiring is positioned within and extends throughout many portions of aircraft 10 such as, for example, within fuselage 12 and wings 14. Clamp assemblies 16 can be seen in FIGS. 2 and 3 secured to structure 18 positioned within aircraft 10. Clamp assemblies 16 secure wire bundles 20 which may vary in number of wires 22 positioned within wire bundle 20 depending on the need for wiring for a particular location within aircraft 10. As a result a scaled down version of clamp assembly 16 is employed with a smaller wire bundle 20 of wires 22 and scaled up version of clamp assembly 16 is employed with a larger wire bundle 20.

It is desired to make a firm securement of wire bundles 20 so as to maintain wires 22 in a desired position within aircraft 10 and yet not have an overly tight securement of wire bundle 20 such that unnecessary wear or damage can be imparted to wires 22 within wire bundles 20. Making this proper accommodation of wire bundle 20 is achieved with properly scaling the size of clamp assembly 16 for a particular wire bundle 20 dimension and in some instances providing a cushion such as cushion collar assembly 24 as seen in FIG. 3 which will surround wires 22 within clamp assembly 16. Cushion collar assembly 24 can provide a more snug fit for wire bundles 20 which may have a slightly smaller size dimension when positioned within clamp assembly 16 maintaining wires 22 in a desired position. Cushion collar assembly 24 can also provide a protective cushioned fit to wire bundles 20 that may have a slightly larger size dimension when positioned within clamp assembly 16. Cushion collar assembly 24 will be discussed in further detail below.

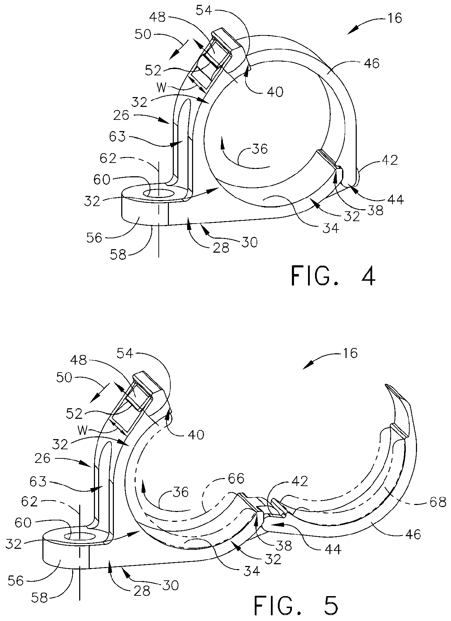

In referring to FIGS. 4-6, clamp assembly 16 for securing wire bundles 20 to structure 18 within aircraft 10 is shown. Clamp assembly 16 is constructed from one of a wide range of materials nonconductive thermoplastic polymer for example such as polyetheretherketone, polyaryletherketone, polyphenylene, amorphous thermoplastic polyetherimide, heat stabilized Nylon or other suitable materials. Clamp assembly 16 includes body 26 which includes first portion 28 having first side 30 for positioning body 26 onto structure 18, as seen in FIGS. 2 and 3. Clamp assembly 16 further includes second portion 32 having second side 34 which extends in a curvilinear direction 36, wherein second portion 32 extends between first end 38 and second end 40.

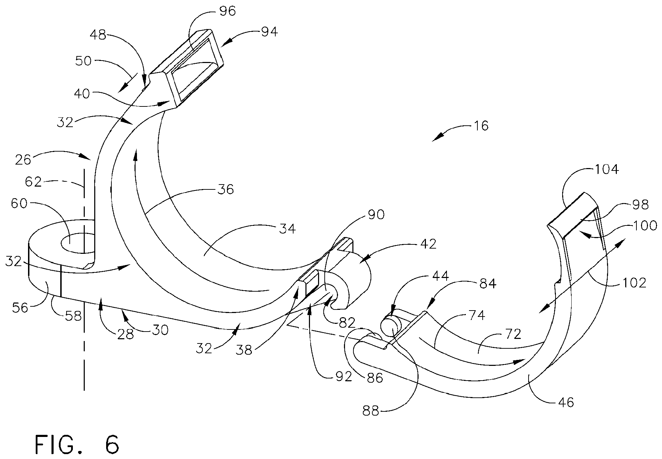

Clamp assembly 16 further includes one of a hinge pin or hinge flange 42, as seen in FIG. 6, associated with first end 38 of second portion 32 of body 26. Clamp assembly 16 as shown, utilizes hinge flange 42 secured at first end 38 of second portion 32, as seen in FIG. 6, however, in a second example, a hinge pin (not shown) is instead positioned at first end 38 of second portion 32. Hinge pin (not shown) is similar in construction to hinge pin 44 secured to strap member 46 as seen in FIG. 6, which will be described in more detail below. Strap member 46 is also constructed of nonconductive material such as thermoplastic or other suitable materials as mentioned for construction of body 26. The arrangement of connecting strap member 46 to body 26 can be readily accomplished with body 26 carrying one of hinge flange 42 or a hinge pin and strap member 46 carrying the other one of hinge flange or hinge pin 44. The hinge flange 42 and hinge pin 44 provide for rotational engagement of strap member 46 to body 26 and will also be discussed in more detail below.

Latch member 48, as seen in FIGS. 4, 5, 9 and 10 is connected to body 26, as will be discussed further below. Latch member 48 extends in direction 50 away from second end 40 of second portion 32 with termination edge 52 of latch member 48 positioned spaced apart from second end 40 of second portion 32. Termination edge 52 extends along in direction 54 in angular relationship to curvilinear direction 36 of second side 34 across a width W of second portion 32 of body 26. In this example, termination edge 52 of latch member 48 extends transverse to curvilinear direction 36. Termination edge 52 is a single position whereat strap member 46 will be secured which will also be further discussed in more detail below.

As seen in FIGS. 4 and 5, first portion 28 of body 26 further includes tab member 56 which includes third side 58 which is aligned with first side 30. Tab member 56 defines aperture 60 which extends through tab member 56 wherein center axis 62 of aperture 60 extends spaced apart from second portion 32 of body 26. Aperture 60 is for receiving fastener 64, such as a bolt, as seen in FIG. 3, for easily securing clamp assembly 16 to structure 18 of aircraft 10. Aperture 60 is offset from the remainder of body 26 and second portion 32 of body 26 defines recess 63 positioned spaced apart from center axis 62 such that the body 26 does not present any obstruction to the installer in inserting and fastening fastener 64 into and through aperture 60 when fastening clamp assembly 16 to structure 18.

This configuration of aperture 60, wherein aperture 60, as will be understood herein, is not utilized for enclosing wire bundles 20 within clamp assembly 16. Thus, clamp assembly 16 provides the installer an opportunity to easily secure clamp assembly 16 to structure 18 with use of aperture 60 at the time of laying out the routing for the later to be installed wire bundles 20. This reduces the time the installer needs spend at the location of clamp assembly 16 at the time of inserting and confining wire bundle 20 within clamp assembly 16. The installer does not need to undo a temporary installation of a clamp assembly when securement of a clamp assembly and enclosing the wire bundle within the clamp assembly are part of the same step of installation and refasten the clamp assembly to the structure. Clamp assembly 16 provides an easy, quick and unobstructed ability to make a first and final installation of clamp assembly 16 and not taking the extra steps mentioned above at the time of installing the wire bundles 20 into clamp assembly 16.

As will be discussed below, at the time of securing wire bundle 20 into clamp assembly 16, this can be accomplished by an installer by simply placing wire bundle 20 into clamp assembly 16 by hand and closing and locking clamp assembly 16 about wire bundle 20 also by hand thereby providing the installer a quick and easy installation of wire bundle into clamp assembly 16 without spending any extended time at each location of clamp assembly 16 and without the need for tools.

Clamp assembly 16, as mentioned earlier, includes cushion collar assembly 24, as seen in FIG. 3. Cushion collar assembly 24 can be seen in FIG. 5 to include first cushion collar section 66 (in phantom), which in this example, is constructed of silicone rubber material and is positioned overlying and extending along second side 34 of second portion 32. Second cushion collar section 68 (in phantom) is included in cushion collar assembly 24, can also be seen in FIG. 5 extending along strap member 46. Thus, with clamp assembly in a closed position, as seen in FIG. 3, first and second cushion collar sections 66, 68 form cushion collar assembly 24 and provides for cushion collar assembly 24 to extend about wire bundle 20.

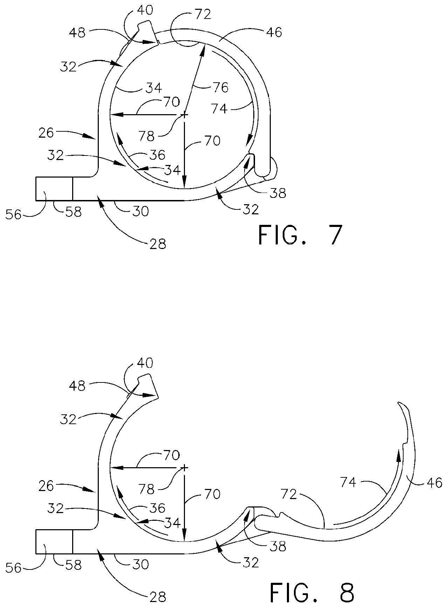

Second side 34 of second portion 32 extends along curvilinear direction 36 and has radius 70, as seen in FIGS. 7 and 8. Strap member 46 has first side 72 which extends in curvilinear direction 74. First side 72 of strap member 46 has radius 76. In this example, radius 76 of first side 72 of strap member 46 is of a same dimension as radius 70 of second side 34 of second portion 32 of body 26. In this example, with strap member 46 in an open position as shown in FIG. 8, radius 70 of curvilinear direction 36 which extends along second side 34, second side 34 forms a portion of a circular configuration having center 78.

In closing strap member 46, strap member 46 is rotated about the engagement of hinge flange 42 and hinge pin 44. Strap member 46 is secured to body 26 at a single location, whereat strap member 46 will be secured at termination edge 52 of latch member 48, which will be further discussed below. With securement of strap member 46 at the single location at termination edge 52 of latch member 48, strap member 46 maintains its shape with radius 76. As a result, first side 72 of strap member 46 and second side 34 of second portion 32 of body 26 form a circular configuration having a coincidental center 78. Position of center 78, being center of radius of radius 70, with strap member 46 in an open position as seen in FIG. 8 remains in the same position with closure and securement of strap member 46 to body 26 at the singular position at termination edge 52 such that center of radius 76 is coincidental with center 78. This maintenance of center 78 in position without moving the position of center 78 with closure and securement of strap member 46, provides for predictable spacing of wires 22 within wire bundles 20 and predictable spacing of wires 22 within wire bundles 20 with respect to structure 18. As a result, the installer can easily achieve reliable installation which will meet the regulations for spacing of wires 22 and reduce the occurrence of a need for reworking installation of wire bundles 20.

As discussed earlier, scaling of clamp assembly 16 is available to accommodate wire bundles 20 that have dimensional differences that would otherwise cause a strap member 46 to distort and change a position of center 78 when securing strap member 46 to the single position on body 26. In the instance where dimension change of wire bundle 20 is relatively small, where there are a few more or a few less wires 22 in wire bundle 20, cushion collar assembly 24 will provide for accommodating such minor dimension differences in wire bundle 20 as mentioned earlier. Cushion collar assembly 24 can provide for a few less wires 22 with providing confining securement with cushion collar assembly 24 occupying space that would otherwise have been occupied by a few additional more wires thereby maintaining securement of wires 22 from being too loose. In instances where there may be a few more wires 22 within wire bundle 20, cushion collar assembly 24 compresses and reduces the amount of space cushion collar assembly 24 occupies and prevents strap member 46 from distortion and at the same time protects wires 22 from excessive wear between clamp assembly 16 and wires 22. Without center 78 moving as a result of closure of clamp assembly 16, wires 22 will remain secure in position and spacing relative to one another and relative to their position with respect to structure 18.

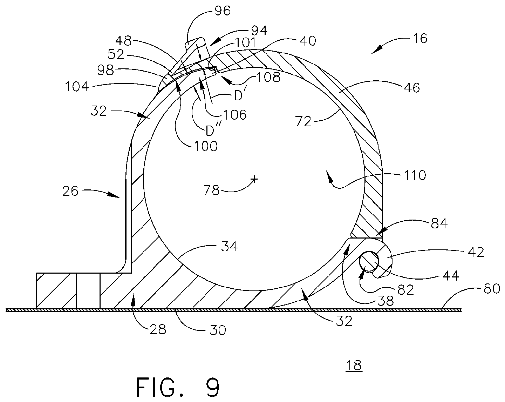

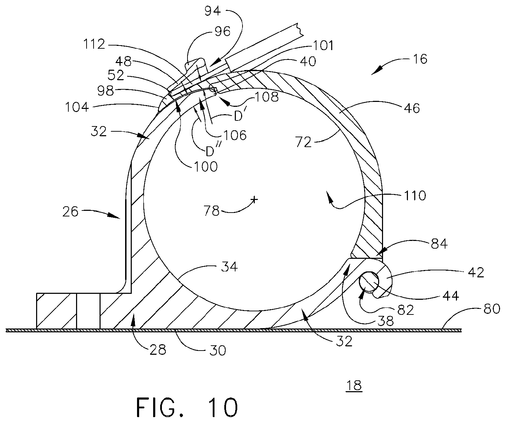

In the example of clamp assembly 16 as seen in FIGS. 9 and 10, hinge flange 42 extends from first end 38 of second portion 32 of body 26. Hinge flange 42 is spaced apart from plane 80 defined by first side 30 of first portion 28. Hinge flange 42 defines an opening 82 which faces in a direction of plane 80, defined by first side 30 of first portion 28 of body 26, as seen in FIGS. 9 and 10. Strap member 46 includes hinge pin 44, which for this example will be described in more detail below, positioned at first end 84, as seen in FIG. 6. In this example hinge pin 44 is configured to include two pin portions 86 and 88 that are positioned spaced apart from one another as seen in FIG. 6 and will facilitate engagement with hinge flange 42. Support rib 90 for hinge flange 42 forms slot 92 such that pin portion 86 easily slides along within slot 92 and engages hinge flange 42. A slot not shown is also formed on an opposing side of support rib 90 providing a formation of a slot that pin portion 88 can also easily slide along within the slot and engage hinge flange 42. The above spacing between hinge flange 42 and plane 80, as mentioned above, permits the installer ease in positioning pin portions 86 and 88 in alignment with slots 92 and the other (not shown) without obstruction of structure 18. With pin portions 86 and 88 aligned with slot 92 and slot (not shown) the installer can slide pin portions 86 and 88 through opening 82 and opening (not shown positioned on opposing side of hinge flange 42) respectively such that hinge pin 44 and hinge flange 42 are placed into engagement with one another permitting strap member 46 rotational movement relative to body 26.

As mentioned earlier, there is a singular location associated with body 26, aside from the rotational engagement set forth above, at which strap member 46 is secured to body 26 when strap member 46 is rotated closed enclosing wiring bundle 20. This single location of securing strap member 46 is at the location of termination edge 52 of latch member 48 as seen in FIGS. 9 and 10. Latch member 48 is secured, in this example, to body 26 with bracket member 94, as seen in FIG. 6, extending from body 26 with cross member 96 of bracket member 94 positioned spaced apart from body 26 wherein latch member 48 is connected to cross member 96. Strap member 46 includes wall member 98 positioned extending across an end portion 100 of strap member 46, as seen in FIG. 6. Wall member 98 extends in direction 102 in angular relationship to curvilinear direction 36 of second side 34 of second portion 32 of body 26. End portion 100 of strap member 46 is positioned spaced apart from first end 84 of strap member 46 and end portion 100 extends along strap member 46 and terminates at second end 104 of strap member 46.

In this example as seen in FIGS. 9 and 10, strap member 46 has a reduction in thickness dimension D' along at least a portion of end portion 100 of strap member 46. Second portion 32 of body 26 has end portion 106 which terminates at second end 40 of second portion 32 of body 26 and in this example also has a reduction in thickness dimension D" along at least a portion of end portion 106 of second portion 32 of body 26. This arrangement of reduced dimension thicknesses of D' and D" provide continuity in the thickness of engagement of body 26 and strap member 46 where a portion of strap member 46 overlies a portion of second portion 32 of body 26.

In closing strap member 46 to a locked position with body 26, as seen in FIG. 9, termination edge 52 of latch member 48 is positioned between wall member 98 and second end 40 of second portion 32 of body 26 abutting wall member 98 at this single location. Strap member 46 is thereby secured to body 26 preventing rotational movement of strap member 46 relative to body 26 and with second side 34 of second portion 32 of body 26. Gap 108 is defined between second side 34 of second portion 32 of body 26 and first side 72 of strap member 46. Gap 108 is further defined between second end 40 of second portion 32 of body 26 and end wall portion 101 of strap member 46. Gap 108 between second end 40 and end wall portion 101 closes and eventually will abut one another which will prevent the installer from over extending strap member 46 and altering the position of wires 22 within clamp assembly 16 at the time of closing strap member 46 to body 26 and engaging wall member 98 to termination edge 52 of latch member 48. Thus at the time of closing strap member 46 about wires 22, gap 108 provides the installer a tolerance of moving strap member 46 beyond termination edge 52 without an undesired alteration of the spacing of wires 22 within wire bundle 20. This configuration of second end 40 and end wall portion 101 thereby limits movement of strap member 46 beyond termination edge 52 and prevents unwanted movement of center 78 and the changing of shape of opening 110 of clamp assembly 16.

In referring to FIG. 10, with a need to unsecure strap member 46 from body 26, a tool member 112, such as a screw driver, for example, is inserted between latch member 48 and strap member 46. With moving latch member 48 out of abutting relationship with wall member 98 of strap member 46, second end 40 moves toward end wall portion 101 of strap member 46. Reducing spacing of gap 108 permits removal of strap member 46 from engagement with body 26 permitting strap member to rotate relative to body 26. As a result, access is provided to wire bundle 20 positioned in clamp assembly 16.

## Claims

1. A clamp assembly (16) for securing wire bundles (20) to a structure, comprising:
a body (26) which comprises:
a first portion (28) having a first side (30) for positioning the body (26) onto the structure;
a second portion (32) having a second side (34) which extends in a curvilinear direction (36) wherein the second portion (32) extends between a first end (38) and a second end (40);
one of a hinge pin (44) or hinge flange (42) is associated with the first end (38) of the second portion (32);
a latch member (48) connected to the body (26), wherein:
a bracket member (94) extends from the body (26) having a spaced apart configuration across a width (W) of the second portion (32) of the body (26) with a cross member (96) of the bracket member (94) positioned spaced apart from the body (26) with the latch member (48) connected to the cross member (96);
the latch member (48) extends in a direction away from the second end (40) of the second portion (32) with a termination edge (52) positioned spaced apart from the second end (40) of the second portion (32); and
the termination edge (52) extends in a direction in angular relationship to the curvilinear direction (36) of the second side (34); and
a strap member (46) which comprises at a first end (84) of the strap member (46) the other of the one of the hinge pin (44) or the hinge flange (42) associated with the first end (38) of the second portion (32) of the body (26) for rotatably coupling the strap member (46) to the body (26), the strap member (46) having an end portion (100) which engages the latch member (48); wherein
the strap member (46) has a first side (72) which extends in a curvilinear direction (74);
the strap member (46) includes a wall member (98) positioned across the end portion (100) of the strap member (46) in a direction in angular relationship to the curvilinear direction (36) of the second side (34) of the second portion (32) of the body (26);
the end portion (100) is positioned spaced apart from the first end (84) of the strap member (46) and the end portion (100) extends along the strap member (46) and terminates at a second end (104) of the strap member (46);
with the termination edge (52) of the latch member (48) positioned between the wall member (98) and the second end (40) of the second portion (32) of the body (26) and abutting the wall member (98), strap member (46) is secured to the body (26) preventing rotational movement of the strap member (46) relative to the body (26) and a gap (108) is defined between the second side (34) of the second portion (32) of the body (26) and the first side (72) of the strap member (46); and
the gap (108) is further defined between the second end (40) of the second portion (32) of the body (26) and an end wall portion (101) of the strap member (46).

2. The clamp assembly (16) of claim 1, wherein:
the first portion (28) further includes a tab member (56) which includes a third side (58) aligned with the first side (30);
the tab member (56) defines an aperture (60) which extends through the tab member (56); and
a center axis (62) of the aperture (60) extends spaced apart from the second portion (32) of the body (26).

3. The clamp assembly (16) of claim 2, wherein the second portion (32) of the body (26) defines a recess (63) positioned spaced apart from the center axis (62) of the aperture (60).

4. The clamp assembly (16) of any one of claims 1-3, further includes a cushion collar section (66) positioned overlying and extending along the second side (34) of the second portion (32).

5. The clamp assembly (16) of any one of claims 1-4, wherein the hinge flange (42) extends from the first end (38) of the second portion (32).

6. The clamp assembly (16) of any one of claims 1-5, wherein the hinge flange (42) is spaced apart from a plane defined by the first side (30) of the first portion (28).

7. The clamp assembly (16) of any one of claims 1-6, wherein the hinge flange (42) defines an opening (82) which faces in the direction of a plane (80) defined by the first side (30) of the first portion (28) of the body (26).

8. The clamp assembly (16) of claim 7, wherein the strap member (46) comprises a hinge pin (44) positioned at the first end (84) of the strap member (46) and configured to be positioned to enter into the hinge flange (42) through the opening (82) such that strap member (46) is permitted rotational movement relative to the body (26) with the hinge pin (44) engaged with the hinge flange (42).

9. The clamp assembly (16) of any one of claims 1-8, wherein the curvilinear direction (74) of the first side (72) of the strap member (46) has a radius (76).

10. The clamp assembly (16) of claim 9, wherein the radius (76) of the curvilinear direction (74) of the first side of the strap member (46) is a same dimension as a radius (70) for the curvilinear direction (36) of the second side (34) of the second portion (32) of the body (26).

11. The clamp assembly (16) of any one of claims 1-10, further includes a cushion collar section (68) positioned overlying and extending along the first side (30) of the strap member (46).

12. The clamp assembly (16) of any one of claims 1-11, wherein:
the strap member (46) has a reduction in thickness dimension along at least a portion of the end portion (100) of the strap member (46); and
the second portion (32) of the body (26) has an end portion (106) which terminates at the second end (40) of the second portion (32) of the body (26) and has a reduction in thickness dimension along at least a portion of the end portion (106) of the second portion (32) of the body (26).

13. The clamp assembly (16) of any one of claims 1-12, wherein the body (26) is constructed of nonconductive thermoplastic.

14. The clamp assembly (16) of any one of claims 1-13, wherein the strap member (46) is constructed of nonconductive thermoplastic.

15. The clamp assembly (16) of any one of claims 1-14, wherein with the termination edge (52) of latch member (48) moved out of abutting relationship with the wall member (98), the second end (40) of the second portion (32) moves toward the end wall portion (101) of the strap member.

## Patentansprüche

1. Klemmenanordnung (16) zum Sichern von Drahtbündeln (20) an einer Struktur, aufweisend:
einen Körper (26), der aufweist:
einen ersten Abschnitt (28), der eine erste Seite (30) zum Positionieren des Körpers (26) auf der Struktur hat;
einen zweiten Abschnitt (32), der eine zweite Seite (34) hat, die sich in kurvenförmiger Richtung (36) erstreckt, wobei sich der zweite Abschnitt (32) zwischen einem ersten Ende (38) und einem zweiten Ende (40) erstreckt;
eines von einem Gelenkstift (44) oder einem Gelenkflansch (42) ist mit dem ersten Ende (38) des zweiten Abschnitts (32) verbunden;
ein Verriegelungselement (48), das mit dem Körper (26) verbunden ist, wobei:
sich ein Klammerelement (94) von dem Körper (26) erstreckt, das eine beabstandete Konfiguration über eine Weite (W) des zweiten Abschnitts (32) des Körpers (26) hat, wobei eine Querstrebe (96) des Klammerelements (94) von dem Körper (26) beabstandet positioniert ist, wobei das Verriegelungselement (48) mit der Querstrebe (96) verbunden ist;
sich das Verriegelungselement (48) in einer Richtung von dem zweiten Ende (40) des zweiten Abschnitts (32) weg erstreckt, wobei eine Abschlusskante (52) von dem zweiten Ende (40) des zweiten Abschnitts (32) beabstandet positioniert ist; und
sich die Abschlusskante (52) in einer Richtung in Winkelbeziehung zu der kurvenförmigen Richtung (36) der zweiten Seite (34) erstreckt; und
ein Gurtteil (46), das an einem ersten Ende (84) des Gurtteils (46) das andere von dem Gelenkstift (44) oder dem Gelenkflansch (42) aufweist, das mit dem ersten Ende (38) des zweiten Abschnitts (32) des Körpers (26) zum drehbaren Verbinden des Gurtteils (46) mit dem Körper (26) verbunden ist, wobei das Gurtteil (46) einen Endabschnitt (100) hat, der in das Verriegelungselement (48) eingreift; wobei
das Gurtteil (46) eine erste Seite (72) hat, die sich in kurvenförmiger Richtung (74) erstreckt;
das Gurtteil (46) ein Wandteil (98) aufweist, das über den Endabschnitt (100) des Gurtteils (46) in einer Richtung in Winkelbeziehung zu der kurvenförmigen Richtung (36) der zweiten Seite (34) des zweiten Abschnitts (32) des Körpers (26) positioniert ist;
der Endabschnitt (100) von dem ersten Ende (84) des Gurtteils (46) beabstandet positioniert ist, und der Endabschnitt (100) sich entlang des Gurtteils (46) erstreckt und an einem zweiten Ende (104) des Gurtteils (46) endet;
wobei die Abschlusskante (52) des Verriegelungselements (48) zwischen dem Wandelement (98) und dem zweiten Ende (40) des zweiten Abschnitts (32) des Körpers (26) positioniert ist und an dem Wandelement (98) anschlägt, das Gurtteil (46) an dem Körper (26) gesichert ist, wodurch die Drehbewegung des Gurtteils (46) relativ zu dem Körper (26) verhindert wird, und ein Abstand (108) zwischen der zweiten Seite (34) des zweiten Abschnitts (32) des Körpers (26) und der ersten Seite (72) des Gurtteils (46) definiert ist; und
der Abstand (108) weiterhin zwischen dem zweiten Ende (40) des zweiten Abschnitts (32) des Körpers (26) und einem Endwandabschnitt (101) des Gurtteils (46) definiert ist.

2. Klemmenanordnung (16) nach Anspruch 1, wobei:
der erste Abschnitt (28) des Weiteren ein Schlaufenelement (56) aufweist, das eine dritte Seite (58) aufweist, die mit der ersten Seite (30) ausgerichtet ist;
das Schlaufenelement (56) eine Öffnung (60) definiert, die sich durch das Schlaufenelement (56) erstreckt; und
eine Mittelachse (62) der Öffnung (60) sich von dem zweiten Abschnitt (32) des Körpers (26) beabstandet erstreckt.

3. Klemmenanordnung (16) nach Anspruch 2, wobei der zweite Abschnitt (32) des Körpers (26) eine Ausnehmung (63) definiert, die von der Mittelachse (62) der Öffnung (60) beabstandet positioniert ist.

4. Klemmenanordnung (16) nach einem der Ansprüche 1-3, die des Weiteren einen Dämpfungskragenabschnitt (66) aufweist, der über der zweiten Seite (34) des zweiten Abschnitts (32) liegend und sich dort entlang erstreckend positioniert ist.

5. Klemmenanordnung (16) nach einem der Ansprüche 1-4, wobei sich der Gelenkflansch (42) von dem ersten Ende (38) des zweiten Abschnitts (32) erstreckt.

6. Klemmenanordnung (16) nach einem der Ansprüche 1-5, wobei der Gelenkflansch (42) von einer Ebene beabstandet ist, die durch die erste Seite (30) des ersten Abschnitts (28) definiert wird.

7. Klemmenanordnung (16) nach einem der Ansprüche 1-6, wobei der Gelenkflansch (42) eine Öffnung (82) definiert, die in Richtung einer Ebene (80) weist, die von der ersten Seite (30) des ersten Abschnitts (28) des Körpers (26) definiert wird.

8. Klemmenanordnung (16) nach Anspruch 7, wobei das Gurtteil (46) einen Gelenkstift (44) aufweist, der an dem ersten Ende (84) des Gurtteils (46) positioniert und dazu konfiguriert ist, positioniert zu werden, um durch die Öffnung (82) in den Gelenkflansch (42) einzutreten, so dass dem Gurtteil (46) eine Drehbewegung relativ zu dem Körper (26) erlaubt wird, wobei der Gelenkstift (44) mit dem Gelenkflansch (42) in Eingriff ist.

9. Klemmenanordnung (16) nach einem der Ansprüche 1-8, wobei die kurvenförmige Richtung (74) der ersten Seite (72) des Gurtteils (46) einen Radius (76) hat.

10. Klemmenanordnung (16) nach Anspruch 9, wobei der Radius (76) der kurvenförmigen Richtung (74) der ersten Seite des Gurtteils (46) die gleiche Dimension hat wie ein Radius (70) für die kurvenförmige Richtung (36) der zweiten Seite (34) des zweiten Abschnitts (32) des Körpers (26).

11. Klemmenanordnung (16) nach einem der Ansprüche 1-10, die des Weiteren einen Dämpfungskragenabschnitt (68) aufweist, der über der ersten Seite (30) des Gurtteils (46) liegend und sich dort entlang erstreckend positioniert ist.

12. Klemmenanordnung (16) nach einem der Ansprüche 1-11, wobei:
das Gurtteil (46) eine Verringerung der Dickendimension entlang wenigstens eines Teils des Endabschnitts (100) des Gurtteils (46) hat; und
der zweite Abschnitt (32) des Körpers (26) einen Endabschnitt (106) hat, der an dem zweiten Ende (40) des zweiten Abschnitts (32) des Körpers (26) endet und eine Verringerung der Dickendimension entlang wenigstens eines Teils des Endabschnitts (106) des zweiten Abschnitts (32) des Körpers (26) hat.

13. Klemmenanordnung (16) nach einem der Ansprüche 1-12, wobei der Körper (26) aus nichtleitendem Thermoplast hergestellt ist.

14. Klemmenanordnung (16) nach einem der Ansprüche 1-13, wobei das Gurtteil (46) aus nichtleitendem Thermoplast hergestellt ist.

15. Klemmenanordnung (16) nach einem der Ansprüche 1-14, wobei, wenn die Abschlusskante (52) des Verriegelungselements (48) aus der Anschlagsbeziehung mit dem Wandelement (98) herausbewegt wird, das zweite Ende (40) des zweiten Abschnitts (32) sich in Richtung des Endwandabschnitts (101) des Gurtteils bewegt.

## Revendications

1. Ensemble de serrage (16) pour fixer des faisceaux de fils (20) sur une structure, ledit ensemble de serrage comprenant :
un corps (26) qui comprend :
une première partie (28) ayant un premier côté (30) pour positionner le corps (26) sur la structure ;
une seconde partie (32) ayant un deuxième côté (34) qui s'étend dans une direction curviligne (36), corps dans lequel la seconde partie (32) s'étend entre une première extrémité (38) et une seconde extrémité (40) ;
l'un ou l'une d'un axe de charnière (44) ou d'une bride de charnière (42) est associé(e) à la première extrémité (38) de la seconde partie (32) ;
un élément de verrouillage (48) relié au corps (26), ensemble de serrage dans lequel :
un élément de support (94) s'étend depuis le corps (26), en ayant une configuration espacée sur une largeur (W) de la seconde partie (32) du corps (26), avec une traverse (96) de l'élément de support (94) positionnée à distance du corps (26), l'élément de verrouillage (48) étant relié à la traverse (96) ;
l'élément de verrouillage (48) s'étend dans une direction s'éloignant de la seconde extrémité (40) de la seconde partie (32), un bord de terminaison (52) étant positionné à distance de la seconde extrémité (40) de la seconde partie (32) ; et
le bord de terminaison (52) s'étend dans une direction disposée de façon angulaire par rapport à la direction curviligne (36) du deuxième côté (34) ; et
un élément formant une sangle (46) qui comprend, au niveau d'une première extrémité (84) de l'élément formant une sangle (46), l'autre parmi l'un ou l'une de l'axe de charnière (44) ou de la bride de charnière (42) associé(e) à la première extrémité (38) de la seconde partie (32) du corps (26), afin que l'élément formant une sangle (46) soit couplé en rotation au corps (26),
l'élément formant une sangle (46) ayant une partie d'extrémité (100) qui engage l'élément de verrouillage (48) ; ensemble de serrage dans lequel :
l'élément formant une sangle (46) a un premier côté (72) qui s'étend dans une direction curviligne (74) ;
l'élément formant une sangle (46) comprend un élément de paroi (98) positionné à travers la partie d'extrémité (100) de l'élément formant une sangle (46) dans une direction disposée de façon angulaire par rapport à la direction curviligne (36) du deuxième côté (34) de la seconde partie (32) du corps (26) ;
la partie d'extrémité (100) est positionnée à distance de la première extrémité (84) de l'élément formant une sangle (46), et la partie d'extrémité (100) s'étend le long de l'élément formant une sangle (46) et se termine au niveau d'une seconde extrémité (104) de l'élément formant une sangle (46) ;
le bord de terminaison (52) de l'élément de verrouillage (48) étant positionné entre l'élément de paroi (98) et la seconde extrémité (40) de la seconde partie (32) du corps (26) et venant en butée contre l'élément de paroi (98), l'élément formant une sangle (46) est fixé sur le corps (26), empêchant le mouvement de rotation de l'élément formant une sangle (46) par rapport au corps (26), et un espace (108) est défini entre le deuxième côté (34) de la seconde partie (32) du corps (26) et le premier côté (72) de l'élément formant une sangle (46) ; et
l'espace (108) est défini en outre entre la seconde extrémité (40) de la seconde partie (32) du corps (26) et une partie de paroi d'extrémité (101) de l'élément formant une sangle (46).

2. Ensemble de serrage (16) selon la revendication 1, dans lequel :
la première partie (28) inclut en outre un élément de languette (56) qui comprend un troisième côté (58) aligné sur le premier côté (30) ;
l'élément de languette (56) définit une ouverture (60) qui s'étend à travers l'élément de languette (56) ; et
un axe central (62) de l'ouverture (60) s'étend en étant espacé de la seconde partie (32) du corps (26).

3. Ensemble de serrage (16) selon la revendication 2, dans lequel la seconde partie (32) du corps (26) définit un évidement (63) positionné en étant espacé de l'axe central (62) de l'ouverture (60).

4. Ensemble de serrage (16) selon l'une quelconque des revendications 1 à 3, qui comprend en outre une section de collier de coussin (66) positionnée de façon superposée et s'étendant le long du deuxième côté (34) de la seconde partie (32).

5. Ensemble de serrage (16) selon l'une quelconque des revendications 1 à 4, dans lequel la bride de charnière (42) s'étend à partir de la première extrémité (38) de la seconde partie (32).

6. Ensemble de serrage (16) selon l'une quelconque des revendications 1 à 5, dans lequel la bride de charnière (42) est à distance d'un plan défini par le premier côté (30) de la première partie (28).

7. Ensemble de serrage (16) selon l'une quelconque des revendications 1 à 6, dans lequel la bride de charnière (42) définit une ouverture (82) qui est tournée dans la direction d'un plan (80) défini par le premier côté (30) de la première partie (28) du corps (26).

8. Ensemble de serrage (16) selon la revendication 7, dans lequel l'élément formant une sangle (46) comprend un axe de charnière (44) positionné au niveau de la première extrémité (84) de l'élément formant une sangle (46) et configuré pour être positionné afin d'entrer dans la bride de charnière (42) en passant par l'ouverture (82), de manière telle que l'élément formant une sangle (46) puisse faire un mouvement de rotation par rapport au corps (26), avec l'axe de charnière (44) qui est engagé avec la bride de charnière (42).

9. Ensemble de serrage (16) selon l'une quelconque des revendications 1 à 8, dans lequel la direction curviligne (74) du premier côté (72) de l'élément formant une sangle (46) a un rayon (76).

10. Ensemble de serrage (16) selon la revendication 9, dans lequel le rayon (76) de la direction curviligne (74) du premier côté de l'élément formant une sangle (46) est dans une même direction qu'un rayon (70) pour la direction curviligne (36) du deuxième côté (34) de la seconde partie (32) du corps (26).

11. Ensemble de serrage (16) selon l'une quelconque des revendications 1 à 10, qui comprend en outre une section de collier de coussin (68) positionnée de façon superposée et s'étendant le long du premier côté (30) de l'élément formant une sangle (46).

12. Ensemble de serrage (16) selon l'une quelconque des revendications 1 à 11, dans lequel :
l'élément formant une sangle (46) a une réduction de dimension d'épaisseur le long au moins d'une portion de la partie d'extrémité (100) de l'élément formant une sangle (46) ; et
la seconde partie (32) du corps (26) a une partie d'extrémité (106) qui se termine au niveau de la seconde extrémité (40) de la seconde partie (32) du corps (26), et a une réduction de dimension d'épaisseur le long au moins d'une portion de la partie d'extrémité (106) de la seconde partie (32) du corps (26).

13. Ensemble de serrage (16) selon l'une quelconque des revendications 1 à 12, dans lequel le corps (26) est composé d'un thermoplastique non conducteur.

14. Ensemble de serrage (16) selon l'une quelconque des revendications 1 à 13, dans lequel l'élément formant une sangle (46) est composé d'un thermoplastique non conducteur.

15. Ensemble de serrage (16) selon l'une quelconque des revendications 1 à 14, dans lequel le bord de terminaison (52) de l'élément de verrouillage (48) s'étant déplacé pour ne plus être en butée par rapport à l'élément de paroi (98), la seconde extrémité (40) de la seconde partie (32) se déplace vers la partie de paroi d'extrémité (101) de l'élément formant une sangle.
